# FASCICULE DE BREVET EUROPEEN

(11) **EP 2 344 320 B1**
(45) Date de publication et mention de la délivrance du brevet: **30.05.2012**
(21) Numéro de dépôt: 09748372.1
(22) Date de dépôt: 29.09.2009
(51) Int. Cl.: B29C 49/48, B29C 33/30

(54) **DISPOSITIF POUR LE FORMAGE DE RECIPIENTS BOXES**
VORRICHTUNG ZUM BILDEN VON KASTENBEHÄLTERN
DEVICE FOR FORMING BOX CONTAINERS

(30) Priorité: 03.12.2008 FR 0806796; 07.10.2008 FR 0805542
(43) Date de publication de la demande: 20.07.2011
(73) Titulaire: Sidel Participations, 76930 Octeville sur Mer (FR)
(72) Inventeur: BRIARD, Arnaud, F-76930 Octeville sur Mer (FR); CHOMEL, Nicolas, F-76930 Octeville sur Mer (FR); AUVRAY, Sylvain, F-76930 Octeville sur Mer (FR); LANGLOIS, Jean-Christophe, F-76930 Octeville sur Mer (FR)
(74) Mandataire: Demulsant, Xavier
(86) Numéro de dépôt international: PCT/FR2009/001161
(87) Numéro de publication internationale: WO 2010/040909

(56) Documents cités:
- EP-A- 0 888 864
- FR-A- 2 833 872
- JP-A- 8 323 845
- US-A- 4 123 217
- US-A1- 2002 090 409
- US-A1- 2007 145 646

## Description

L'invention a trait au formage des récipients à partir d'ébauches en matière thermoplastique, et, plus précisément au formage de récipients munis de réserves en creux telles que des poignées intégrées.

Rappelons que la fabrication des récipients comprend généralement une opération de soufflage qui se déroule dans un moule dont la paroi définit une cavité au sein de laquelle est introduite l'ébauche, cette dernière venant, au cours du soufflage, épouser la paroi sous l'effet de la pression gazeuse élevée qui règne dans l'ébauche, préalablement chauffée de manière à permettre sa déformation plastique, voir par exemple le document US 4 123217.

Certains récipients peuvent être munis de réserves en creux réalisées dans un but esthétique (par ex. création de galbes), structurel (par ex. réalisation de panneaux destinés à absorber la déformation du récipient lors d'un remplissage à chaud) ou fonctionnel (réalisation d'une poignée de préhension du récipient).

Lorsqu'une telle réserve atteint une certaine profondeur, le récipient ne peut être formé dans un moule ordinaire car, malgré la pression de soufflage élevée (généralement supérieure à 30 bars), celle-ci est insuffisante pour parfaitement appliquer la matière contre le relief du moule destiné à former la réserve, surtout dans les zones tournées à l'opposé du col du récipient à partir duquel se développe la bulle de soufflage. Une solution pourrait consister à augmenter la pression de soufflage. Toutefois, cette solution implique de modifier toute l'installation et génère des surcoûts liés au traitement des gaz à très haute pression. En outre, le résultat n'est pas qualitativement convaincant.

Aussi, on recourt habituellement à des moules munis d'inserts mobiles initialement escamotés dans la paroi du moule et déployés en présence du récipient dans le moule pour venir repousser la paroi de celui-ci, comme cela est illustré dans la demande de brevet européen EP 1 922 256 (Sidel).

Cette technique, couramment appelée « boxage », est notamment utilisée pour le formage de récipients munis d'une poignée intégrée. Elle ne va toutefois pas sans inconvénients. En particulier, il est malaisé d'adapter la machine à différentes références. De longues interventions sont en effet nécessaires pour remplacer les pièces (notamment le moule et les inserts) associées à une référence de récipient donnée, par les pièces associées à une autre référence de récipient (par exemple de capacité supérieure).

Un objectif de l'invention est de proposer une solution permettant de faciliter le changement de référence dans une unité de formage de récipients équipée d'un moule à insert.

À cet effet, l'invention propose, selon un premier objet, un dispositif pour le formage de récipients à partir d'ébauches en matière plastique selon la revendication 1.

Le système de fixation rapide comprend de préférence un mécanisme de blocage du verrou au moins en position verrouillée.

Par ailleurs, il est de préférence prévu un système de commande de déplacement du support entre une position reculée correspondant à la position rétractée de l'insert, et une position avancée correspondant à la position sortie de l'insert. Ce système de commande comprend par exemple un actionneur muni d'un poussoir linéaire couplé au support.

On peut également prévoir un système de guidage en translation du support, qui comprend deux guides espacés sur lesquels le support est monté coulissant.

Chaque guide comprend par exemple une tige de guidage, le support présentant deux parties conformées en coulisseaux montés coaxialement sur les tiges entre deux butées de fin de course.

L'invention propose, selon un deuxième objet, une unité de formage comprenant au moins un dispositif tel que décrit ci-dessus.

D'autres objets et avantages de l'invention apparaîtront à la lumière de la description faite ci-après en référence aux dessins annexés dans lesquels :
- la figure 1 est une vue en perspective montrant une unité de formage de type linéaire, équipée d'un dispositif conforme à l'invention ;
- la figure 2 est une vue de détail de l'unité de formage de la figure 1 ;
- la figure 3 est une de détail en perspective illustrant un dispositif conforme à l'invention ;
- la figure 4 est une vue en perspective du dispositif de la figure 3, suivant un autre angle de vue ;
- la figure 5 est une vue en plan de dessus du dispositif des figures 3 et 4 ;
- la figure 6 est une vue d'élévation en coupe d'un insert de boxage suivant le plan de coupe VI-VI tracé sur la figure 5 ;
- la figure 7 est une vue en coupe de l'insert de boxage de la figure 6, suivant le plan de coupe VII-VII tracé sur la figure 6 ;
- la figure 8 est une vue en coupe partielle illustrant le système de fixation de l'insert de boxage sur son support ;

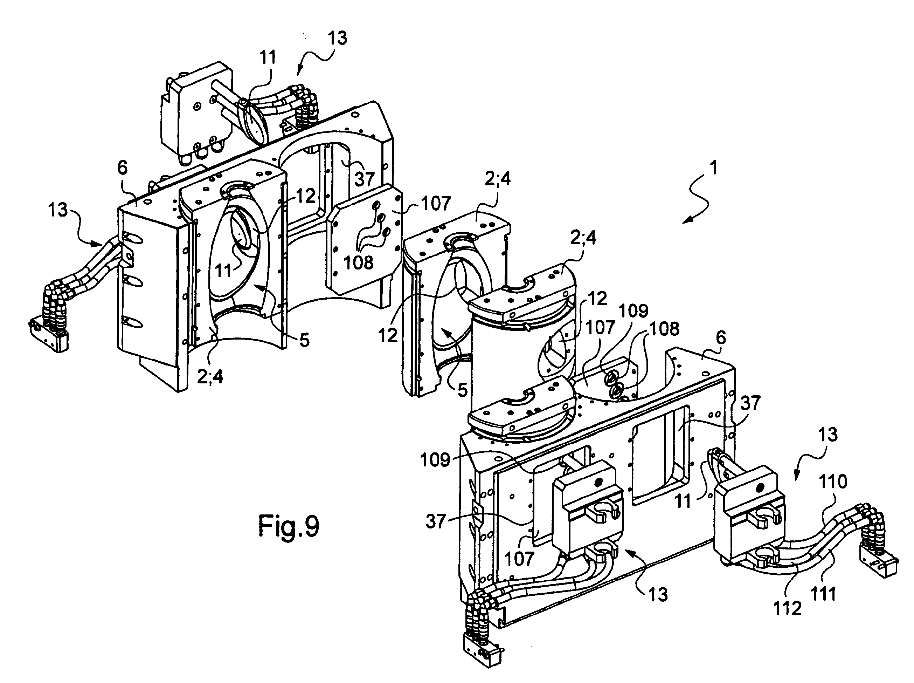

- la figure 9 est une vue en perspective montrant partiellement et en éclaté, l'unité de formage de la figure 1 ;
- la figure 10 est une vue en coupe transversale de l'unité de formage de la figure 8, montrée en position fermée lors de l'opération de boxage d'un récipient.

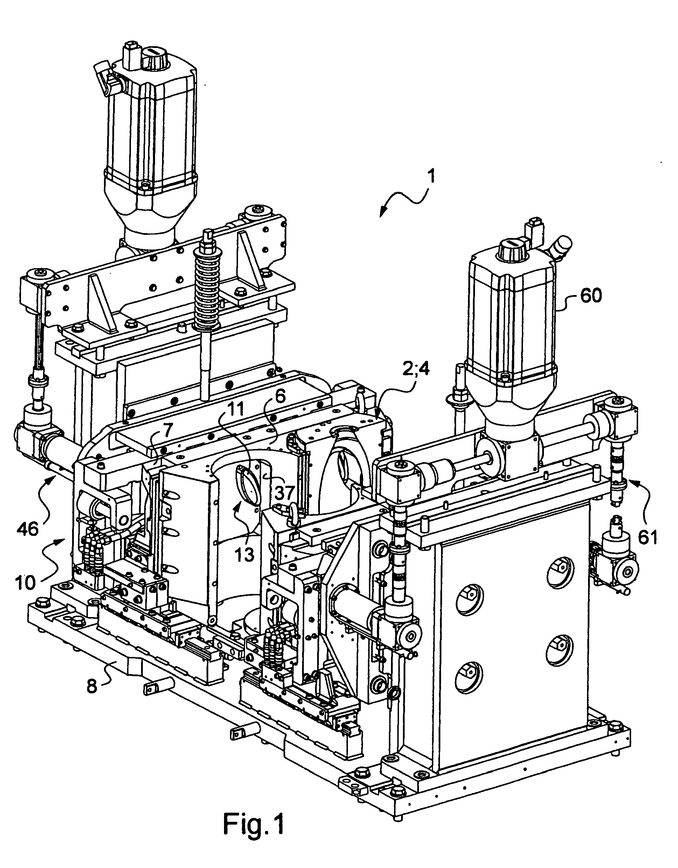

Sur la figure 1 est partiellement représentée une unité **1** de formage pour une machine de fabrication de récipients **100** à partir d'ébauches en matière plastique, tel que PET (Polyéthylène téréphtalate). Le terme « ébauche » est employé pour désigner tant des préformes que des récipients intermédiaires ayant subi une première série d'opérations dans un premier moule (par exemple un présoufflage) et destinés à subir une seconde série d'opérations dans un deuxième moule (par exemple un soufflage).

Le terme « formage » est employé pour désigner tant une opération de présoufflage ou de soufflage qu'une opération de finition. En l'occurrence, l'unité **1** de formage ici représentée est configurée pour réaliser une opération de boxage sur des récipients intermédiaires ayant subi des opérations de présoufflage et de soufflage. A l'issue de ces opérations, chaque récipient intermédiaire présente sur son corps deux excroissances symétriques dont le boxage provoque le retournement vers l'intérieur du récipient, et la formation subséquente de deux réserves **101** en creux constituant ensemble une poignée de préhension du récipient **100.**

Comme cela est représenté sur la figure 1, l'unité **1** de formage est du type linéaire et comprend une pluralité de moules **2** munis chacun d'une paroi **3** définissant une cavité destinée à recevoir une ébauche.

Plus précisément, chaque moule **2** comprend deux demi-moules **4,** munis chacun d'une demi-cavité **5.** Les demi-moules **4** sont montés en regard l'un de l'autre sur deux porte-moules **6** fixés respectivement sur deux supports **7** mobiles en translation horizontale par rapport à un bâti **8** fixe de l'unité **1** de formage, suivant une direction transversale perpendiculaire à une direction longitudinale d'amenée des ébauches, entre :
- une position fermée dans laquelle les supports **7** sont rapprochés, les demi-moules **4** étant en contact mutuel par un plan de joint **9** et les demi-cavités **5** formant conjointement la cavité du moule **2 ;**
- une position ouverte (illustrée sur la figure 1) dans laquelle les supports **7** sont écartés l'un de l'autre pour permettre l'évacuation des récipients et le chargement des ébauches.

Pour une description plus précise de la cinématique, et d'une forme possible de réalisation d'un système de commande d'ouverture et de fermeture des moules **2,** on pourra se reporter à la demande de brevet européen n°EP 1 924 421 au nom de la demanderesse.

L'unité **1** de formage comprend en outre au moins un dispositif **10** de boxage. Ce dispositif **10** comprend un insert **11** de boxage prévu pour repousser la paroi de l'ébauche à la manière d'un poinçon de manière à y former une réserve en creux, par exemple pour la réalisation d'une poignée.

En l'occurrence, l'unité **1** de formage, configurée pour accueillir deux ébauches, comprend deux dispositifs **10** de boxage montés en vis-à-vis, prévus pour effectuer un boxage simultané de l'ébauche de part et d'autre du plan de joint et réaliser deux réserves en creux symétriques formant ensemble une poignée. Chaque dispositif **10** de boxage comprend par conséquent deux inserts **11** de boxage montés en parallèle et se déplaçant simultanément.

Chaque insert **11** est monté mobile en translation par rapport au demi-moule **4** correspondant, entre une position rétractée dans laquelle l'insert **11** est escamoté dans la paroi **3,** et une position sortie dans laquelle l'insert **11** s'étend en saillie par rapport à la paroi **3.**

Afin de permettre le passage et le mouvement de l'insert **11**, chaque demi-moule **4** est muni d'une fenêtre **12** pratiquée transversalement et dont le contour correspond, au jeu de fonctionnement près, à la surface balayée par l'insert **11.**

Le dispositif **10 de** boxage est conçu pour permettre un montage et un démontage rapide des inserts **11,** de sorte à permettre l'interchangeabilité des inserts **11** soit pour procéder à une réparation, soit dans le cadre de l'adaptation de l'unité **1** au formage de récipients de forme ou de capacité différente.

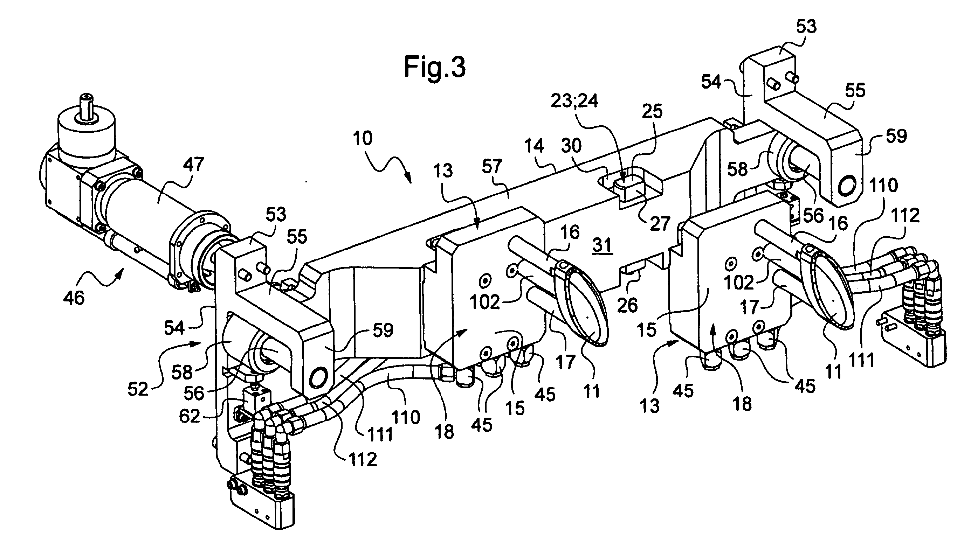

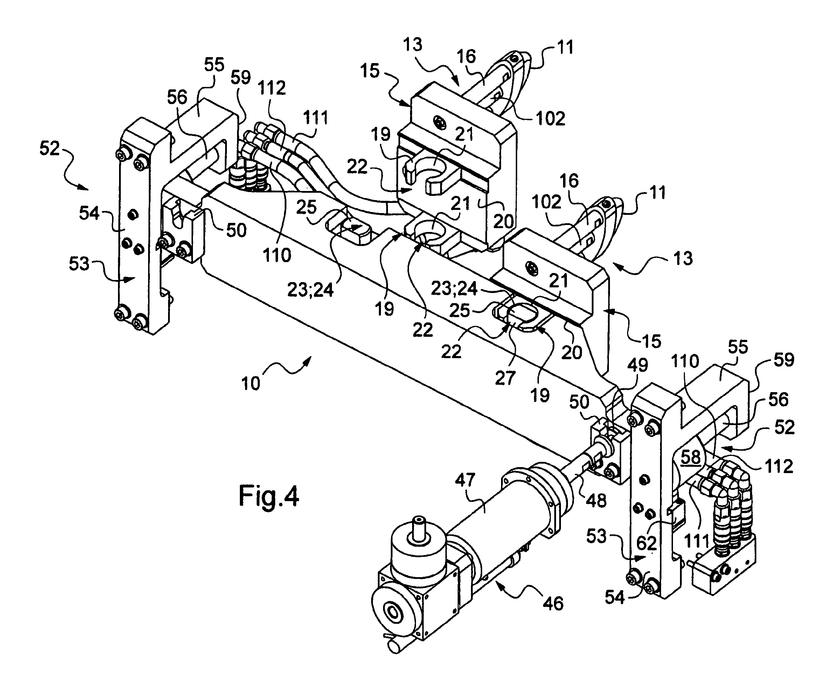

Comme cela est bien visible sur les figures 3, 4 et 5, chaque insert **11** fait partie d'un module **13** de boxage monté de manière amovible sur un support **14** mobile monté en translation linéaire transversale par rapport au bâti **8.**

Outre l'insert **11**, chaque module **13** de boxage comprend une platine **15** de forme sensiblement parallélépipédique, sur laquelle l'insert **11** est fixé de manière rigide par l'intermédiaire de trois tiges superposées, à savoir une tige **16** supérieure, une tige inférieure, et une tige centrale **102,** toutes trois ancrées dans une face antérieure **18** de la platine **15.**

Le module **13** de boxage comprend en outre deux crampons **19** d'accrochage superposés qui s'étendent en saillie perpendiculairement à une face postérieure **20** de la platine **15.**

Chaque crampon **19** se présente sous forme d'un étrier ouvert et comprend un logement **21** central à contour sensiblement circulaire, qui se prolonge à une extrémité libre du crampon **19** par une ouverture **22** de largeur inférieure au diamètre du logement **21.**

La platine **15** est montée de manière amovible sur le support **14** mobile par l'intermédiaire d'un système **23** de fixation rapide qui comprend un verrou **24** sous forme d'une cheville munie à une extrémité supérieure d'une tête **25** supérieure et à une extrémité inférieure d'une tête **26** inférieure.

Chaque tête **25, 26** a une forme oblongue et se présente sous forme d'un cylindre, dont le diamètre hors tout correspond, au jeu près, au diamètre du logement **21,** cylindre dans lequel sont taillés deux méplats **27** parallèles diamétralement opposés, dont l'écartement est légèrement inférieur à la largeur de l'ouverture **22.**

Chaque verrou **24** est montée sur le support **14** par l'intermédiaire d'un axe **28** reliant les têtes **25, 26** et reçu dans un alésage **29** formé dans le support **14,** chaque tête **25, 26** s'étendant en saillie dans un évidement **30** dont la forme est sensiblement complémentaire d'un crampon **19** et qui s'ouvre sur une face antérieure **31** du support **14,** en regard de la face postérieure **20** des platines **15.**

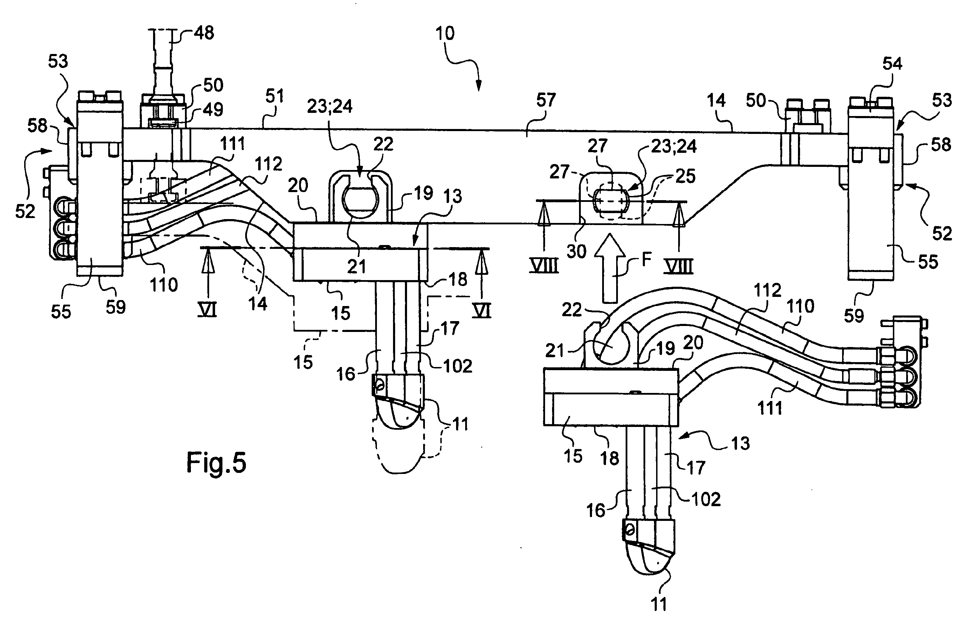

Chaque verrou **24** peut adopter deux positions utiles, à savoir :
- une position de verrouillage, illustrée en trait plein notamment sur la figure 5, dans laquelle les têtes **25, 26** s'étendent avec leurs méplats **27** sensiblement parallèles à la face **31** antérieure du support **14,** et
- une position de déverrouillage, illustrée en pointillés à droite sur la figure 5, dans laquelle les têtes **25, 26** s'étendent avec leurs méplats **27** sensiblement perpendiculaires à la face **31** antérieure du support **14.**

Le verrou **24** est articulé par rapport au support **14,** le passage de la position de verrouillage à la position de déverrouillage s'effectuant par une rotation du verrou **24** d'un quart de tour autour de son axe **28.**

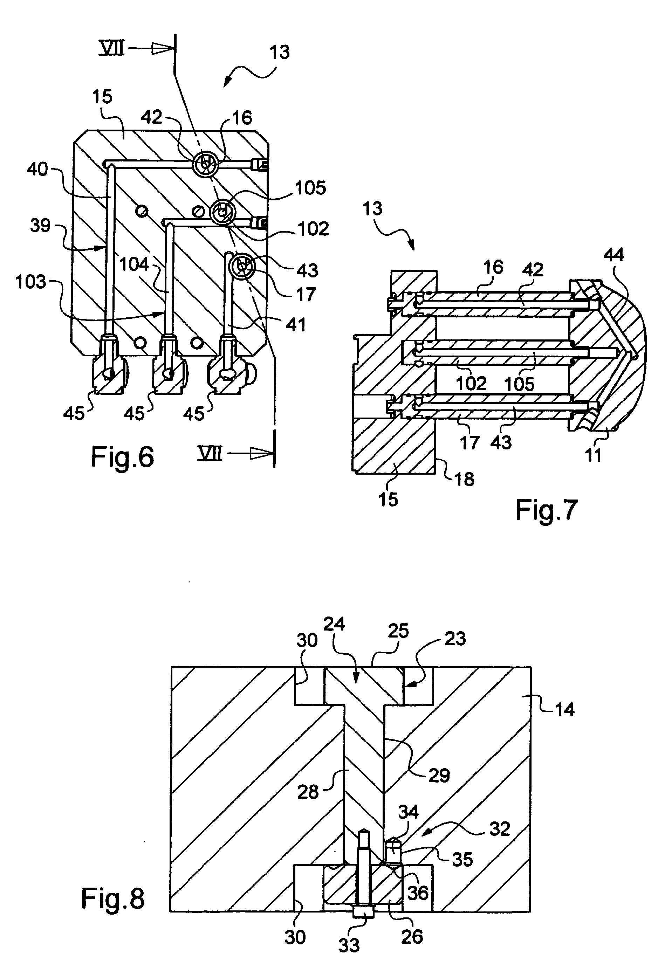

Comme cela est illustré sur la figure 8, le verrou **24** est muni d'un mécanisme **32** de blocage en position, qui comprend une vis 33 de serrage axial de la tête **26** inférieure sur l'axe **28.**

Le mécanisme **32** de blocage du verrou **24** comprend en outre un pion **34** de blocage, inséré dans un trou **35** formé dans le support **14.** Le pion **34** de blocage dépasse légèrement du trou **35** et présente ainsi une partie saillante qui, lorsque le verrou **24** est dans l'une ou l'autre de ses positions utiles et que la vis **33** est serrée, est reçue dans une marque **36** conique ménagée dans la tête **26** inférieure, de manière à bloquer celle-ci (et donc le verrou **24)** en rotation par rapport au support **14.**

Pour faire passer le verrou **24** de l'une de ses positions utiles à l'autre, il suffit de desserrer légèrement la vis **33** (par exemple d'un tour), jusqu'à ce que le pion **34** sorte de la marque **36,** puis d'imprimer au verrou **24** un quart de tour. On resserre ensuite la vis **33** pour bloquer le verrou **24** dans sa nouvelle position.

L'accouplement d'un module **13** de boxage au support **14** s'effectue de la manière suivante.

Le verrou **24** est d'abord placé dans sa position de déverrouillage, par la méthode décrite ci-dessus. Les têtes **25, 26** sont alors dans leur position illustrée en pointillés sur la figure 5.

La platine **15** est alors amenée perpendiculairement à la face **31** antérieure du support **14** comme indiqué par la flèche F de la figure 5, les crampons **19** étant reçus dans leurs évidements **30** respectifs. Les crampons **19** sont emboîtés sur les têtes **25, 26,** celles-ci venant s'enfiler dans les logements **21** au travers des ouvertures **22.**

Le verrou **24** est alors tourné d'un quart de tour pour être placé dans sa position de verrouillage par la méthode décrite ci-dessus, comme illustré à gauche sur la figure 5, de sorte que le module **13** de boxage se trouve fixé au support **14** sans possibilité de retrait intempestif.

Le désaccouplement du module **13** de boxage du support **14** s'effectue selon la procédure inverse.

Compte tenu de l'encombrement dans le voisinage des verrous **24,** la rotation de chaque verrou **24** peut être facilitée par l'emploi d'un outil spécifique ayant une extrémité en forme de chape qui vient s'emboîter sur la tête **25** supérieure. L'homme du métier veillera à ce que l'outil présente à son extrémité une forme (par exemple cylindrique rainurée) qui permette son insertion dans le logement **21**, de sorte à permettre la rotation du verrou **24** de sa position verrouillée à sa position déverrouillée alors même que le module **13** de boxage est accouplé au support **14.**

La fixation du module **13** de boxage (et donc de l'insert **11**) au support **14** peut être qualifiée de « rapide », dans la mesure où il suffit de quelques secondes d'intervention manuelle pour changer le verrou **24** de position. Un système de fixation classique, dans lequel les inserts **11** seraient fixés par simple vissage dans le support **14,** nécessiterait en revanche une intervention manuelle longue, d'une durée de plusieurs minutes.

Il est à noter que la rotation des verrous **24** peut être mécanisée, de sorte à accélérer encore l'intervention. On pourra à cet effet prévoir par exemple un actionnement par pignon-crémaillère.

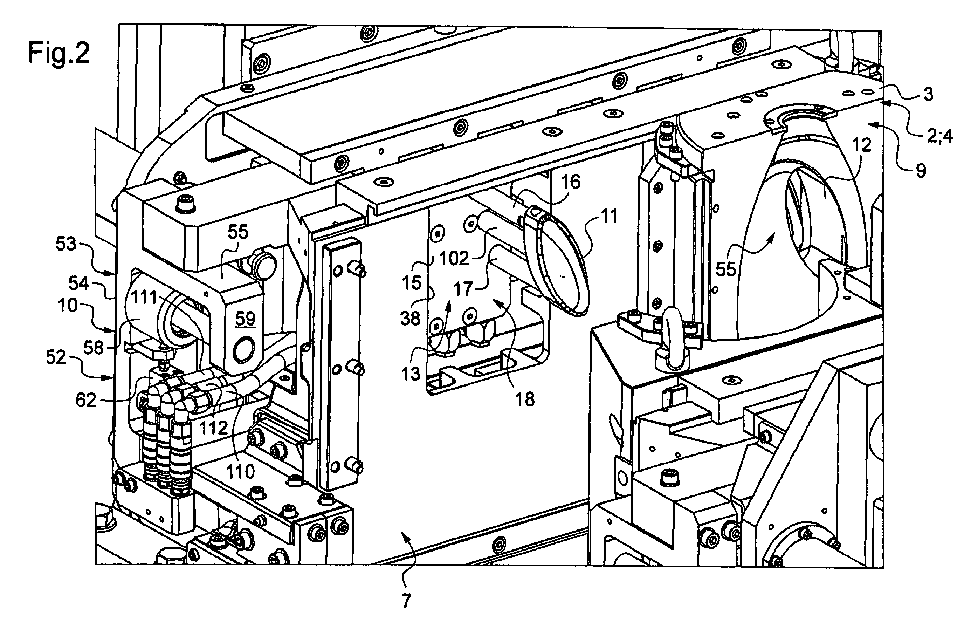

Dans la configuration illustrée de l'unité **1** de formage, le montage et le démontage de chaque module **13** de boxage nécessite la dépose préalable du demi-moule **4** correspondant, comme cela est représenté sur la figure 2. En revanche, afin d'éviter la dépose supplémentaire du porte-moule **6** et du support **14** mobile, des fenêtres **37, 38** permettant le passage des modules **13** de boxage seront avantageusement pratiquées dans le porte-moule **6** et le support **7** respectivement, comme illustré sur les figures 1 et 2.

Par ailleurs, comme cela est illustré sur les figures 6 et 7, chaque module **13** de boxage peut être muni d'un circuit **39** de circulation d'un fluide caloporteur, employé à des fins de chauffage ou de refroidissement de l'insert **11**, en fonction des applications.

Ce circuit **39** comprend une canalisation **40** d'amenée et une canalisation **41** d'évacuation du fluide, percées dans la platine **15** et raccordées à deux alésages **42, 43** pratiqués respectivement dans la tige **16** supérieure et dans la tige **17** inférieure. Un conduit **44** ménagé dans l'insert **11** relie les alésages **42, 43** pour permettre la circulation du fluide et la chauffe (ou le refroidissement) de l'insert **11.**

Un circuit **103** supplémentaire d'injection d'un gaz est en outre ménagé dans l'insert **11.** Ce circuit **103** comprend une canalisation **104** d'amenée du gaz (par exemple de l'air sous pression), percée dans la platine **15** et raccordée à un alésage **105** pratiqué pour partie dans la tige **104** centrale et pour partie dans l'insert **11.** Cet alésage **105** débouche, sur une surface externe de l'insert **11,** dans une chambre **106** de compensation.

Cette chambre **106** de compensation est délimitée, d'une part, latéralement, par la fenêtre **12** dans le demi-moule **4** et la fenêtre **37** dans le porte-moule **6,** et d'autre part, transversalement, du côté de la demi-cavité **5** par le récipient **100** (lorsque celui-ci est présent), et du côté du support **7** par une plaque **107** de fermeture étanche de la chambre **106,** emboîtée dans la fenêtre **37** et fixée (par exemple par vissage) dans le porte-moule **6.**

La plaque **107** comprend trois perçages **108** superposés dans lesquels les tiges **16, 17, 102** sont montées coulissantes pour permettre le mouvement de translation du module **13** de boxage. L'étanchéité du passage des tiges **16, 17, 102** au travers des perçages **108** peut être assurée au moyen de joints **109** dynamiques à lèvres montés dans des lamages formés dans la plaque **107** autour de chaque perçage **108.**

La chambre **106** de compensation délimite ainsi un volume étanche, au sein duquel circule l'insert **11,** et dans lequel peut être injecté un gaz (tel que de l'air) sous pression, par exemple par l'intermédiaire du circuit **103** d'air. La pression régnant dans la chambre **106** peut ainsi compenser la pression régnant dans le récipient **100** en cours de formage et éviter ainsi les déformations qui pourraient affecter les réserves **101** en creux, dont la température encore élevée pourrait, sans compensation, conduire à leur déformation sous l'effet de la pression régnant dans le récipient **100.**

Les canalisations **40, 41, 104** s'ouvrent sur une face inférieure de la platine **15.** Des raccords **45,** vissés dans les ouvertures des canalisations **40, 41, 104,** relient celles-ci respectivement à des tubulures **110**, **111** souples d'amenée et d'évacuation du fluide caloporteur, et à une tubulure **112** souple d'amenée du gaz sous pression.

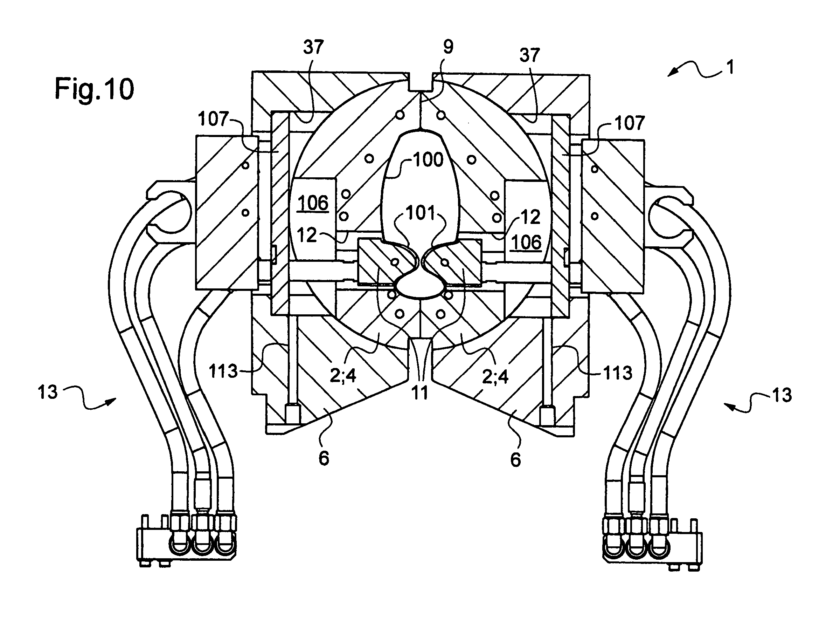

Le gaz sous pression présent dans la chambre **106** de compensation peut être évacué vers l'extérieur via une canalisation **113** percée transversalement dans le porte-moule **6,** comme cela est illustré sur la figure 10. Cette canalisation **113** est avantageusement raccordée à un silencieux (non représenté) permettant d'absorber au moins pour partie les bruits dus à la décompression de la chambre **106.**

Comme cela est visible notamment sur les figures 3, 4 et 5, le dispositif **13** de boxage comprend par ailleurs un système **46** de commande du déplacement guidé du support **14,** entre :
- une position reculée, correspondant à la position rétractée des inserts **11** et illustrée en trait plein sur les figures 3, 4 et 5, et
- une position avancée, correspondant à la position sortie des inserts **11** et partiellement illustrée en trait mixte à gauche sur la figure 5.

Le système **46** de commande comprend un actionneur **47** fixé au bâti **8** et intégrant un poussoir **48** linéaire muni, à une extrémité libre, d'une tête **49** emboîtée dans un cavalier **50** fixé sur une face **51** arrière du support **14,** de manière à coupler en translation celui-ci au poussoir **48**.

Le dispositif **13** de boxage comprend en outre un système **52** de guidage linéaire du mouvement de translation du support **14.** Ce système **52** comprend deux guides **53** espacés entre lesquels le support **14** est monté et auxquels il est assujetti. Chaque guide **53** comprend un montant **54** rigidement fixé au bâti **8,** ainsi qu'une potence **55** s'étendant en porte-à-faux par rapport au montant **54** et supportant une tige **56** cylindrique de guidage.

Le support **14** présente, de part et d'autre d'un corps **57** central recevant les modules **13** de boxage, deux extrémités **58** longitudinales opposées conformées en coulisseaux et montées chacune coaxialement sur une tige **56** de guidage.

Dans la position reculée du support **14,** les coulisseaux **58** viennent en butée de fin de course contre le montant **54.** Dans la position avancée du support **14,** les coulisseaux **58** viennent en butée de fin de course contre un retour **59** en équerre formé à une extrémité avant de la potence **55.**

L'actionneur **47** peut être du type pneumatique, le poussoir **48** se présentant par exemple sous la forme d'un vérin double effet. Dans le mode de réalisation représenté, toutefois, le système **46** de commande est du type électromécanique. Dans ce cas, l'actionneur **47** est mécanique, et le système **46** comprend un moteur **60** électrique (par exemple du type sans balais ou « brushless ») dont un arbre de sortie est couplé à l'actionneur **47** par l'intermédiaire d'une transmission **61** à renvoi d'angle engrenant le poussoir **48** par un ensemble de type pignon-crémaillère.

En outre, comme cela est visible sur la figure 3, le système **52** de guidage peut être équipé de moyens de détection de la position du support **14,** par exemple sous forme d'un capteur **62** fixé sur chaque montant **54** et configuré pour détecter la présence du coulisseau **58** en position reculée.

## Revendications

1. Dispositif pour le formage de récipients à partir d'ébauches en matière plastique, qui comprend :
- un moule **(2)** muni d'une paroi **(3)** définissant une cavité **(5)** destinée à recevoir l'ébauche;
- un insert **(11)** de boxage monté mobile par rapport au moule **(2)** entre une position rétractée dans laquelle l'insert (**11**) est escamoté dans la paroi (**3**), et une positon sortie dans laquelle l'insert (**11**) s'étend en saillie par rapport à la paroi **(3),** vers l'intérieur de la cavité **(5)** ;
- une platine (**15**), sur laquelle l'insert (**11**) est fixé rigidement ;
le dispositif **étant caractérisé en ce qu**'il comprend en outre :
- un support (**14**) sur lequel la platine (**15**) est montée de manière amovible ;
- un système (**23**) de fixation, rapide de la platine (**15**) au support (**14**) ;
**et en ce que**
- le système (**23**) de fixation comprend un verrou (**24**) monté sur le support **(14)** et articulé entre une position de déverrouillage permettant l'accouplement ou le désaccouplement de la platine **(15)** au support (**14**), et une position de verrouillage permettant le maintien de la platine (**15**) sur le support (**14**) ;
- la platine **(16)** est munie d'au moins un crampon (**19**) propre à coopérer avec le verrou (**24**), le verrou (**24**) étant monté en rotation autour d'un axe (**28)** et comprenant au moins une tête (**25**, **26)** oblongue, et chaque crampon (**19**) présentant un logement (**21**) apte à recevoir la tête (**25**, **26**) sans possibilité de retrait en position verrouillée, ce logement (**21**) se prolongeant par une ouverture **(22)** apte à permettre le passage de la tête **(25, 26)** en position déverrouillée.

2. Dispositif selon la revendication 1, **caractérisé en ce que** le système **(23)** de fixation rapide comprend un mécanisme **(32)** de blocage du verrou (**24**) au moins en position verrouillée.

3. Dispositif selon la revendication 1 ou 2, **caractérisé en ce que** qu'il comprend un système **(46)** de commande dé déplacement du support (**14**) entre une position reculée correspondant à la position rétractée de l'insert (**11**) et position avancée correspondant à la position sortie de l'insert (**11**).

4. Dispositif selon la revendication 3, **caractérisé en ce que** le système (**46**) de commande comprend un actionneur (**47**) muni d'un poussoir (**48**) linéaire couplé au support (**14**).

5. Dispositif selon la revendication 3 ou 4, **caractérisé en ce qu'**il comprend un système (**52**) de guidage en translation du support (**14**), qui comprend deux guides (**53**) espacés sur lesquels le support (**14**) est monté coulissant.

6. Dispositif selon la revendication 5, **caractérisé en ce que** chaque guide (**53**) comprend une tige (**56**) de guidage, et **en ce que** le support (**14**) présente deux parties conformées en coulisseaux (**58**) montés coaxialement sur les tiges (**56**) entre deux butées (**54**, **59**) de fin de course.

7. Dispositif selon l'une des revendications 1 à 6, **caractérisé en ce qu'**il comprend un porte-moule (**6**) qui, avec le moule (**2**), une chambre (**106**) de compensation étanche.

8. Dispositif selon la revendication 7, **caractérisé en ce que** la chambre **(106)** de compensation est fermée, du côté du porte-moule (**6**), par une plaque (**107**) fixée au porte-moule (**6**) et par rapport à laquelle l'insert **(11)** est monté mobile.

9. Dispositif selon l'une des revendications 1 à 6, qui comprend en outre un porte-moule (**6**) muni d'une fenêtre (**37**) permettant le passage d'un module de boxage (**13**) comprenant l'insert **(11)** et la platine (**15**).

10. Dispositif selon la revendication 7, qui comprend en outre un support (**7**) sur lequel est fixé le porte-moule (**6**), ce support étant muni d'une fenêtre (**38**) permettant le passage d'un module de boxage (**13**) comprenant l'insert (**11**) et la platine (**15**).

11. Unité **(1)** de formage de récipients à partir d'ébauches en matière plastique, **caractérisée en ce qu'**elle comprend au moins un dispositif selon l'une des revendications 1 à 10.

## Claims

1. Device for forming containers from plastic blanks, which comprises:
- a mould (2) provided with a wall (3) defining a cavity (5) designed to receive the blank;
- a boxing insert (11) mounted so as to be able to move relative to the mould (2) between a retracted position in which the insert (11) is recessed into the wall (3) and a projecting position in which the insert (11) protrudes from the wall (3) towards the inside of the cavity (5);
- a plate (15) to which the insert (11) is rigidly attached;
- the device being **characterized in that** it also comprises:
- a support (14) on which the plate (15) is removably mounted;
- a system (23) for rapid attachment of the plate (15) to the support (14);
and **in that**
- the attachment system (23) comprises a bolt (24) mounted on the support (14) and articulated between an unlocked position allowing the coupling or uncoupling of the plate (15) to/from the support (14), and a locked position allowing the plate (15) to be held on the support (14);
- the plate (15) is provided with at least one clamp (19) suitable for interacting with the bolt (24), the bolt (24) being mounted so as to rotate about a spindle (28) and comprising at least one oblong head (25, 26), and each clamp (19) having a housing (21) capable of accommodating the head (25, 26) without the possibility of retraction to the locked position, this housing (21) extending via an opening (22) capable of allowing the head (25, 26) to travel to the unlocked position.

2. Device according to Claim 1, **characterized in that** the system (23) of rapid attachment comprises a mechanism (32) for immobilizing the bolt (24) at least in the locked position.

3. Device according to Claim 1 or 2, **characterized in that** it comprises a system (46) for controlling the movement of the support (14) between a backward position corresponding to the retracted position of the insert (11) and a forward position corresponding to the projecting position of the insert (11).

4. Device according to Claim 3, **characterized in that** the control system (46) comprises an actuator (47) provided with a linear thruster (48) coupled to the support (14).

5. Device according to Claim 3 or 4, **characterized in that** it comprises a system (52) for guiding in translation the support (14), which system comprises two guides (53) spaced apart on which the support (14) is slidingly mounted.

6. Device according to Claim 5, **characterized in that** each guide (53) comprises a guide rod (56), and **in that** the support (14) has two portions formed like slides (58) mounted coaxially on the rods (56) between two end-of-travel stops (54, 59).

7. Device according to one of Claims 1 to 6, **characterized in that** it comprises a mould holder (6) which, together with the mould (2), delimits a sealed compensation chamber (106).

8. Device according to Claim 7, **characterized in that** the compensation chamber (106) is closed, on the side of the mould holder (6), by a plate (107) attached to the mould holder (6) and relative to which the insert (11) is movably mounted.

9. Device according to one of Claims 1 to 6, which also comprises a mould holder (6) provided with a window (37) allowing the passage of a boxing module (13) comprising the insert (11) and the plate (15).

10. Device according to Claim 7, which also comprises a support (7) to which the mould holder (6) is attached, this support being provided with a window (38) allowing the passage of a boxing module (13) comprising the insert (11) and the plate (15).

11. Unit (1) for forming containers from plastic blanks, **characterized in that** it comprises at least one device according to one of Claims 1 to 10.

## Patentansprüche

1. Vorrichtung zum Formen von Behältern ausgehend von Rohlingen aus Kunststoff, die enthält:
- ein Formwerkzeug (2), das mit einer Wand (3) versehen ist, die einen Hohlraum (5) definiert, der zur Aufnahme des Rohlings bestimmt ist;
- einen Treibeinsatz (11), der bezüglich des Formwerkzeugs (2) zwischen einer eingezogenen Stellung, in der der Einsatz (11) in die Wand (3) eingefahren ist, und einer ausgetretenen Stellung beweglich montiert ist, in der der Einsatz (11) sich bezüglich der Wand (3) ins Innere des Hohlraums (5) vorstehend erstreckt,
- eine Platine (15), auf der der Einsatz (11) starr befestigt ist,
- wobei die Vorrichtung **dadurch gekennzeichnet ist, dass** sie weiter enthält:
- einen Träger (14), auf den die Platine (15) entfernbar montiert ist;
- ein System (23) zur Schnellbefestigung der Platine (15) am Träger (14);
und dass:
- das Befestigungssystem (23) einen Riegel (24) enthält, der auf den Träger (14) montiert und zwischen einer Entriegelungsstellung, die das Koppeln oder Entkoppeln der Platine (15) an den oder vom Träger (14) erlaubt, und einer Verriegelungsstellung angelenkt ist, die den Halt der Platine (15) auf dem Träger (14) erlaubt;
- die Platine (15) mit mindestens einer Klammer (19) versehen ist, die mit dem Riegel (24) zusammenwirken kann, wobei der Riegel (24) um eine Achse (28) drehbar montiert ist und mindestens einen länglichen Kopf (25, 26) enthält, und jede Klammer (19) eine Aufnahme (21) aufweist, die den Kopf (25, 26) aufnehmen kann, ohne die Möglichkeit des Herausziehens in der verriegelten Stellung, wobei diese Aufnahme (21) sich durch eine Öffnung (22) verlängert, die den Durchgang des Kopfes (25, 26) in der entriegelten Stellung erlauben kann.

2. Vorrichtung nach Anspruch 1, **dadurch gekennzeichnet, dass** das System (23) zur Schnellbefestigung einen Blockiermechanismus (32) des Riegels (24) zumindest in der verriegelten Stellung enthält.

3. Vorrichtung nach Anspruch 1 oder 2, **dadurch gekennzeichnet, dass** sie ein System (46) zur Steuerung der Verschiebung des Trägers (14) zwischen einer zurückgewichenen Stellung entsprechend der eingezogenen Stellung des Einsatzes (11) und einer vorgeschobenen Stellung enthält, die der ausgetretenen Stellung des Einsatzes (11) entspricht.

4. Vorrichtung nach Anspruch 3, **dadurch gekennzeichnet, dass** das Steuersystem (46) einen Stellantrieb (47) enthält, der mit einem linearen Drücker (48) versehen ist, der mit dem Träger (14) gekoppelt ist.

5. Vorrichtung nach Anspruch 3 oder 4, **dadurch gekennzeichnet, dass** sie ein System (52) zur Translationsführung des Trägers (14) enthält, das zwei beabstandete Führungen (53) enthält, auf denen der Träger (14) gleitend montiert ist.

6. Vorrichtung nach Anspruch 5, **dadurch gekennzeichnet, dass** jede Führung (53) eine Führungsstange (56) enthält, und dass der Träger (14) zwei Teile aufweist, die als Schieber (58) gestaltet sind, die koaxial auf die Stangen (56) zwischen zwei Hubendeanschlägen (54, 59) montiert sind.

7. Vorrichtung nach einem der Ansprüche 1 bis 6, **dadurch gekennzeichnet, dass** sie einen Formwerkzeugträger (6) enthält, der mit dem Formwerkzeug (2) eine dichte Kompensationskammer (106) begrenzt.

8. Vorrichtung nach Anspruch 7, **dadurch gekennzeichnet, dass** die Kompensationskammer (106) auf der Seite des Formwerkzeugträgers (6) durch eine Platte (107) verschlossen wird, die am Formwerkzeugträger (6) befestigt ist und bezüglich der der Einsatz (11) beweglich montiert ist.

9. Vorrichtung nach einem der Ansprüche 1 bis 6, die außerdem einen Formwerkzeugträger (6) enthält, der mit einem Fenster (37) versehen ist, das den Durchgang eines Treibmoduls (13) erlaubt, das den Einsatz (11) und die Platine (15) enthält.

10. Vorrichtung nach Anspruch 7, die außerdem einen Träger (7) enthält, auf dem der Formwerkzeugträger (6) befestigt ist, wobei dieser Träger mit einem Fenster (38) versehen ist, das den Durchgang eines Treibmoduls (13) erlaubt, das den Einsatz (11) und die Platine (15) enthält.

11. Einheit (1) zum Formen von Behältern ausgehend von Rohlingen aus Kunststoff, **dadurch gekennzeichnet, dass** sie mindestens eine Vorrichtung nach einem der Ansprüche 1 bis 10 enthält.
